# EUROPÄISCHE PATENTANMELDUNG

(11) **EP 4 421 368 A2**
(43) Veröffentlichungstag der Anmeldung: **28.08.2024**
(21) Anmeldenummer: 24159750.9
(22) Anmeldetag: 26.02.2024
(51) Int. Cl.: F16L 3/137, F16L 5/10, F16L 11/11, F16L 11/115, F16L 11/12, F16L 21/02, F16L 21/03, F16L 25/00

(54) **ROHRVERBUND UND KUNSTSTOFFROHRSYSTEM**

(30) Priorität: 24.02.2023 DE 102023104539
(71) Anmelder: InnoDo AG, 8595 Altnau (CH)
(72) Erfinder: Bächle, Dieter, 8595 Altnau (CH)
(74) Vertreter: Patent- und Rechtsanwälte Behrmann Wagner PartG mbB

(57) **Zusammenfassung**

Die Erfindung betrifft einen Rohrverbund, umfassend wenigstens zwei Rohre (1), bevorzugt einstückige Kunststoffrohre, zum Leiten von gasförmigen oder flüssigen Fluiden, bevorzugt Kunststoff-Abgasrohr zum Ableiten von Abgas, insbesondere von Gebäudeheizungen, oder zum Schutz von innenliegend geführten Leitungen und Kabeln, wobei die Rohre (1) jeweils wenigstens einen, bevorzugt eine Vielzahl von, Glattrohrabschnitten (3) umfassen, und ein Bundelement (35), insbesondere eine Rohr-Rosette, wobei die Rohre (1) über das Bundelement (35), bevorzugt fluidleitend, verbunden sind, wobei dass das Bundelement (35) einen Außenring (30) und einen Innenring (32) umfasst, welche formschlüssig miteinander verbunden sind.

## Beschreibung

Die vorliegende Erfindung betriff einen Rohrverbund nach dem Oberbegriff des Anspruchs 1. Die Erfindung betriff des Weiteren ein Kunststoffrohrsystem, insbesondere Kunststoff-Abgasrohrsystem oder Kunststoff-Schutzrohrsystem gemäß Anspruch 9.

Aus dem Stand der Technik sind bereits verschiedene Ausgestaltungsformen von Rohrverbünden bekannt, bei denen Rohre in ein Verbindungselement eingesteckt werden, um miteinander verbunden zu werden. Die bekannten Ausgestaltungen sind dabei allerdings in der Regel aufwändig in der Montage und eine endgültige Befestigung des Rohrverbundes, wird erst durch ein Festschrauben der Verbindungselemente mit den Rohren erreicht, wodurch zusätzlich auch die Demontage der auf diese Weise montierten Rohrverbünde, zeit- und arbeitsintensiv ist. Dazu kommt, dass die Verbindungselemente oft aufwändig und teuer in der Herstellung sind und komplizierte Werkzeuge zur Formung benötigen, weshalb die Verbindungselemente oft in mehreren Einzelteilen hergestellt werden, welche erst bei der Montage am Rohr, durch den Monteur verbunden werden. Die bekannten Verbindungselemente weisen dabei des Weiteren den Nachteil auf, dass sie oft nur für definierte Rohrarten verwendet werden können, weshalb insbesondere beim Verlegen verschiedener Rohre in einem Bauprojekt, die Gefahr von Fehlmontagen besteht, welche die Integrität der Rohrverbünde gefährden.

Die Aufgabe der vorliegenden Erfindung besteht darin einen verbesserten Rohrverbund bereitzustellen, welcher die Nachteile im Stand der Technik überwindet und insbesondere einfach herzustellen und zu installieren ist.

Diese Aufgabe wird mit einem Rohrverbund mit den Merkmalen des unabhängigen Anspruchs 1 gelöst. Weiterhin wird diese Aufgabe im Hinblick auf ein Kunststoffrohrsystem mit den Merkmalen des Anspruchs 9 gelöst.

Vorteilhafte Ausführungsformen sind Gegenstand der nachfolgenden Beschreibung, der Figurenbeschreibung, der Figuren und der Unteransprüche.

Alle nachfolgend vorrichtungsmäßig beschriebenen und beanspruchten Merkmale sollen auch als entsprechend verfahrensmäßig offenbart und beanspruchbar gelten.

Der Rohrverbund umfasst wenigstens zwei Rohre, bevorzugt einstückige Kunststoffrohre, zum Leiten von gasförmigen oder flüssigen Fluiden, bevorzugt Kunststoff-Abgasrohr zum Ableiten von Abgas, insbesondere von Gebäudeheizungen, oder zum Schutz von innenliegend geführten Leitungen und Kabeln, wobei die Rohre jeweils wenigstens einen, bevorzugt eine Vielzahl von, Glattrohrabschnitten umfassen, und ein Bundelement, insbesondere eine Rohr-Rosette, wobei die Rohre über das Bundelement, bevorzugt fluidleitend, verbunden sind.

Erfindungsgemäß ist dabei vorgesehen, dass das Bundelement einen Au-ßenring und einen Innenring umfasst, welche formschlüssig miteinander verbunden sind.

Die Erfindung hat dabei erkannt, dass durch das Bundelement ein besonders stabiler Rohrverbund zwischen Rohren hergestellt werden kann, welcher über lange Zeit Bestand hat und dennoch simpel in der Montage ist. Des Weiteren ist die Herstellung des Rohrverbundes durch die Ausführung mit einem Innenring und Außenring mit einfachen Werkzeugen umsetzbar, wobei vorteilhaft der innere und äußere Ring mit einem Spritzgussverfahren und Schrumpfmontage hergestellt und verbunden werden. Durch die formschlüssige Verbindung des Innenrings und Außenrings können hierbei insbesondere strukturelle Merkmale am Bundelement verwirklich werden, ohne dass ein Monteur des Rohrverbundes Einzelteile selber miteinander verbinden muss, wobei der formschlüssige Verbund hierbei auch eine besonders stabile und dichte Ausführung des Bundelements erreicht. Besonders bevorzugt ist der Innendurchmesser des Bundelements hierbei derart gewählt, dass Rohre, insbesondere Kunststoffrohre, zum Leiten von gasförmigen oder flüssigen Fluiden, bevorzugt Kunststoff-Abgasrohr zum Ableiten von Abgas, insbesondere von Gebäudeheizungen, oder zum Schutz von innenliegend geführten Leitungen und Kabeln, ohne nennenswerten Kraftaufwand in das Bundelement eingesteckt werden können und dennoch schlüssig und stabil mit dem Bundelement angeordnet sind.

Die Rohre umfassen wenigstens einen Glattrohrabschnitt an wenigstens einem Rohrende und werden so miteinander verbunden, dass die Rohrenden mit den Glattrohrabschnitten aneinander angrenzen und eine Au-ßenoberfläche des jeweiligen Glattrohrabschnitts in das Bundelement eingeführt ist oder eingesteckt ist. Dies bedeutet, dass zur Herstellung des Rohrverbundes die mit Glattrohrabschnitten versehenen Rohrenden einander zugewandt angeordnet sind und diese durch das Bundelement miteinander verbunden werden. Dabei kann bevorzugt vorgesehen sein, dass die Rohrenden nicht überlappen. Stattdessen können die Rohrenden auf Stoß zueinander angeordnet sein oder durch einen, bevorzugt beidseitigen Anschlag, vorzugsweise einem Steckkragen, des Innenrings voneinander beabstandet angeordnet sein.

Gemäß einer ersten vorteilhaften Ausführungsform kann vorgesehen sein, dass der Innenring, entlang einer axialen Richtung, eine kürzere axiale Erstreckung als der Außenring aufweist, wobei der Außenring an seinen axialen Enden, insbesondere verdickte, bevorzugt wenigstens abschnittsweise geneigte, Endabschnitte ausbildet, welche den Innenring wenigstens teilweise umfassen. Vorteilhaft ist der Innenring hierbei zentral an dem Außenring angeordnet, derart, dass die Mittelpunkte ihrer jeweiligen axialen Erstreckung übereinanderliegen. Vorteilhaft sind der Innenring und Außenring hierbei, insbesondere in ihrer Materialstärke, derart ausgeführt, dass sie eine gemeinsame, insbesondere annähernd bündig abschließende, Fläche ausbilden, an welcher sowohl der Innenring als auch der Au-ßenring wenigstens abschnittsweise an ein oder mehr eingesteckten Rohren anliegen.

Gemäß einer weiteren vorteilhaften Ausführungsform kann vorgesehen sein, dass zwischen dem Außenring und Innenring, insbesondere zwischen den Endabschnitten und dem Innenring, bevorzugt zwei, Aussparungen ausgebildet werden, wobei den Aussparungen Dichtmittel, bevorzugt in Umfangrichtung vollständig geschlossene Dichtringe, zugeordnet sind. Diese Ausführung kann vorteilhaft durch die vorhergehend beschriebene Anordnung von Innenring und Außenring, mit besonders einfach ausgebildetem Werkzeug, bevorzugt rein durch die Anordnung der Ringe, erreicht werden. Die Dichtmittel verhindern hierbei besonders effektiv einen Eintritt von Feuchtigkeit und Schmutz in den Rohrverbund. Des Weiteren erhöhen die Dichtmittel die Haftung zwischen dem Bundelement und den eingesteckten Rohren, ganz besonders bevorzugt verklemmen die Dichtmittel die eingesteckten Rohre, wodurch ein besonders stabiler Verbund gewährleistet wird.

Gemäß einer weiteren vorteilhaften Ausführungsform kann vorgesehen sein, dass die Endabschnitte hakenartig ausgebildet sind, wobei ein innerer Hakenabschnitt und die Grundfläche des Außenrings einen Winkel von 70 bis 90°, bevorzugt 75 bis 85°, einschließen. In einer weiteren vorteilhaften Ausführungsform kann zudem vorgesehen sein, dass der Innenring an seinen axialen Enden eine Neigung aufweist, welche dem Winkel spiegelsymmetrisch ausgebildet ist. Hierdurch werden die Dichtmittel in den Aussparungen fixiert, wobei ein Einbringen und aktives Entnehmen der Dichtmittel in die Aussparungen oder aus ihnen hinaus dennoch einfach möglich ist. Als Grundfläche soll in diesem Zusammenhang die Fläche verstanden werden, welche sich bei dem Innenring und Außenring entlang der axialen Erstreckung und entlang des Umfangs des jeweiligen Ringelements erstreckt.

Gemäß einer weiteren vorteilhaften Ausführungsform kann vorgesehen sein, dass der Innenring einen, bevorzugt entlang der axialen Erstreckung zentral angeordneten, Steckkragen umfasst, welcher an der äußeren und inneren Seite der Grundfläche des Innenrings, insbesondere als umfangseitiger Innen- und Außenwulst, ausgebildet ist. Der Steckkragen wirkt hierbei vorteilhaft als Positionierungshilfe für die in das Bundelement eingesteckten Rohre, wobei der Steckkragen insbesondere derart angeordnet ist, dass der Steckkragen und die anliegenden Rohre eine durchgängige, insbesondere bündig abschließende, Innenoberfläche ausbilden.

Gemäß einer weiteren vorteilhaften Ausführungsform kann vorgesehen sein, dass der Außenring aus zwei gleichartigen, insbesondere spiegelsymmetrischen, Flanken besteht, welche an ihrer Verbindungsstelle eine dem Steckkragen komplementäre Einkerbung einschließen. Durch diese Ausführung wird die Verbindung des Innenrings und Außenrings besonders schlüssig und stabil ausgebildet, insbesondere bei Anordnung des Innenrings am Außenring, während der Außenring noch vom Spritzgussverfahren aufgeheizt ist, sowie der Herstellungsprozess vereinfacht.

Gemäß einer weiteren vorteilhaften Ausführungsform kann vorgesehen sein, dass ein oder mehr Rohre als einstückiges Kunststoffrohr ausgebildet sind, umfassend wenigstens einen, bevorzugt eine Vielzahl von, starren Glattrohrabschnitten und wenigstens einen, bevorzugt eine Vielzahl von, entlang einer Längsachse des Kunststoffrohres wenigstens einseitig an die starren Glattrohrabschnitte angrenzenden Strukturabschnitten, wobei die Strukturabschnitte wenigstens einen flexiblen Biegeabschnitt aufweisen, welcher als Wellenrohrabschnitt ausgebildet ist, wobei wenigstens ein Strukturabschnitt, bevorzugt jeder zweite Strukturabschnitt, besonders bevorzugt jeder Strukturabschnitt, einen Versteifungsabschnitt aufweist, wobei der Versteifungsabschnitt als stabilisierter Wellenrohrabschnitt ausgebildet ist, der eine entlang der Längsachse verlaufende Versteifungsstruktur aufweist, die durch eine in Umfangsrichtung abschnittsweise Unterbrechung von Wellentälern des Wellenrohrabschnitts ausgebildet wird. Das Kunststoffrohr kann hierbei aus verschiedenen Materialen und/oder Materialmischungen gefertigt sein, zum Beispiel aus Polyvinylidenfluorid (PVDF) und/oder Ethylene Chlortrifluorethylene (ECTFE). Dabei kann das Material und/oder die Materialmischung insbesondere auf den Anwendungsbereich des Kunststoffrohres angepasst sein.

Als Versteifung soll in diesem Zusammenhang verstanden werden, dass der Widerstand des Strukturabschnitts gegen eine Verformung erhöht wird, wobei grundsätzlich möglich ist, dass eine Restelastizität erhalten bleibt.

Die Wellenrohrabschnitte, welche einfach und effizient in der Herstellung sind, weisen hierbei besonders vorteilhafte Eigenschaften im Hinblick auf die thermische Ausdehnung auf, sodass gerade, aber keinesfalls nur, bei entsprechend langen Abgasrohren oder Abgasleitungen weniger Toleranz bzw. wenig Spiel oder Beweglichkeit der einzelnen Kunststoff-Abgasrohre für die thermische Ausdehnung zwischen einem erkalteten Zustand und einem Dauerbetriebszustand oder Dauerabgasführungszustand eingeplant und realisiert werden muss. Durch die Kombination mit den Versteifungsstrukturen wird dabei erstaunlicherweise erreicht, dass über die Wellenrohrabschnitte sowohl die nötige Flexibilität erreicht wird, um das Kunststoffrohr auch durch verwinkelte Einbauräume zu führen, als auch eine Versteifung und damit einhergehende strukturelle Vorteile des Kunststoffrohres. Dabei hat sich auch herausgestellt, dass die Umsetzung einer gewünschten oder beabsichtigten Verformung der Biegeabschnitte durch die angrenzenden Versteifungsabschnitte erleichtert wird.

Der Herstellungsaufwand des Kunststoffrohres wird hierbei durch die Versteifungsstrukturen nur unmaßgeblich erhöht, wodurch die Herstellung der einstückigen Kunststoffrohe und daraus bestehenden Kunststoffrohrsystemen, besonders einfach und Materialsparend erfolgen kann, ohne Abstriche bei der Flexibilität oder Stabilität der Kunststoffrohre zu erfordern.

Gemäß einer weiteren vorteilhaften Ausführungsform kann vorgesehen sein, dass über den Umfang verteilt mehrere, bevorzugt vier, Versteifungsstrukturen ausgebildet sind. Alternative Ausführungen mit mehr oder weniger Versteifungsstrukturen in gerader oder ungerader Anzahl sind ebenso denkbar, wobei vier Versteifungsstrukturen besonders bevorzugt sind, da das Verhältnis zwischen Materialeinsatz und Stabilität besonders günstig ist.

Gemäß einer weiteren vorteilhaften Ausführungsform kann vorgesehen sein, dass die Versteifungsstruktur auf einer Außenseite eine Stegform oder eine Gratform ausbildet, deren Radialerstreckung die Radialerstreckung der Wellenberge des Wellenrohrabschnitts nicht übersteigt. Durch diese Ausführung kann das Kunststoffrohr besonders vorteilhaft in etablierte Installationsverfahren integriert werden, da der Außenumfang des Kunststoffrohres durch die Versteifungsstrukturen nicht erhöht wird und daher keinen zusätzlichen Bauraum benötigt wird. Die Steg- oder Gratform der Versteifungsstruktur hat sich hierbei als besonders vorteilhaft herausgestellt, da sie besonders einfach und materialsparend im Herstellungsprozess umgesetzt werden kann.

Gemäß einer weiteren vorteilhaften Ausführungsform kann vorgesehen sein, dass die Versteifungsstrukturen gleichmäßig über den Umfang verteilt angeordnet sind. Durch die gleichmäßige Verteilung fällt die Stabilität des Kunststoffrohres besonders hoch aus, wobei verschiedene systematische Verteilungen über den Umfang denkbar sind. Bei einer geraden Anzahl von Versteifungsstrukturen ist zum Beispiel denkbar, dass die Versteifungsstrukturen spiegelachsensymmetrisch über den Umfang verteilt sind und/oder paarweise angeordnet sind. Bei einer ungeraden Anzahl von Versteifungsstrukturen ist zum Beispiel denkbar, dass die Versteifungsstrukturen rotationssymmetrisch angeordnet sind.

Gemäß einer weiteren vorteilhaften Ausführungsform kann vorgesehen sein, dass die Versteifungsabschnitte zwischen zwei entlang der Längsachse angrenzend ausgebildeten Biegeabschnitten angeordnet sind. Durch diese Ausführungsform kann das Kunststoffrohr und/oder abgelängte Abschnitte des Kunststoffrohres, besonders vielfältig und variabel installiert werden. Weiterhin hat sich herausgestellt, dass die Umsetzung einer gewünschten oder beabsichtigten Verformung der Biegeabschnitte, durch die angrenzenden Versteifungsabschnitte erleichtert wird.

Gemäß einer weiteren vorteilhaften Ausführungsform kann vorgesehen sein, dass die Strukturabschnitte gegenüber den Glattrohrabschnitten eine verringerte Wandstärke aufweisen. Durch die verringerte Wandstärke kann hierbei besonders vorteilhaft eine Materialeinsparung erreicht werden, wobei die Strukturabschnitte durch ihre Ausführung als Wellenrohrabschnitt keinen Verlust von Stabilität erfahren und die Flexibilität der Biegeabschnitte noch weiter verbessert wird.

Gemäß einer weiteren vorteilhaften Ausführungsform kann vorgesehen sein, dass der Biegeabschnitt eine Vielzahl von in Längsrichtung hintereinander angeordneten bistabilen Falt- oder bistabilen Wellenelementen aufweist. Die bistabilen Falt- oder Wellenelemente können in vorteilhafterweise eine Verformung aufnehmen und beibehalten. Dadurch können in dem Biegeabschnitt nicht nur elastische, sondern zumindest teilweise oder sogar vollständig plastische Verformungen auf der Basis der bistabilen Falt- oder Wellenelemente vorgenommen werden, die dann zu einer optimierten Einbausituation, insbesondere ohne oder mit reduzierten, inneren Spannungen des Kunststoffabgasrohres führen.

Gemäß einer weiteren vorteilhaften Ausführungsform kann vorgesehen sein, dass der Versteifungsabschnitt in Längsrichtung länger ist, bevorzugt zwischen 200% und 300% länger ist, als der/die angrenzenden Biegeabschnitt/e. Die relative Länge bezieht sich dabei auf einen einzelnen Strukturabschnitt. Dadurch kann in vorteilhafterweise eine gute Verformbarkeit, mit einer hohen Stabilität und einem geringen Gewicht, sowie einem geringen Materialaufwand kombiniert werden. Weiter kann auch vorgesehen sein, dass die Strukturabschnitte in Längsrichtung länger sind, bevorzugt zwischen 20% und 30% länger sind, als die benachbarten Glattrohrabschnitte. Dies trifft insbesondere für innere oder innenliegende Glattrohrabschnitte zu. Für endseitige Glattrohrabschnitte kann die Länge der Strukturabschnitte zweimal bis dreimal so lang sein, wie die der Glattrohrabschnitte.

Gemäß einer weiteren, vorteilhaften Ausführungsform kann vorgesehen sein, dass ein maximaler Durchmesser im Versteifungsabschnitt gleich groß ist, wie ein maximaler Durchmesser im angrenzenden Biegeabschnitt. Hierdurch wird besonders vorteilhaft die Verformbarkeit im Biegeabschnitt verbessert und erleichtert. Alternativ ist ebenso denkbar, dass der minimale Durchmesser im Biegeabschnitt und/oder im Wellenrohrabschnitt kleiner ist als der maximale Durchmesser im angrenzenden Strukturabschnitt und/oder Glattrohrabschnitt. Durch den kleiner gewählten, minimalen Durchmesser im Biegeabschnitt im Vergleich zum angrenzenden Strukturabschnitt und/oder Glattrohrabschnitt wird die Stabilität des Kunststoffabgasrohrs vorteilhaft beeinflusst.

Gemäß einer weiteren, bevorzugten Ausführungsform kann vorgesehen sein, dass die Länge des Kunststoffrohres in Längsrichtung maximal 5m beträgt. Bevorzugt beträgt die Länge 3 m bis 5 m, ganz besonders bevorzugt 2,5 m bis 5 m. Diese Längen lassen sich einerseits besonders vorteilhaft im Thermoform-Verfahren herstellen und können gleichermaßen einfach und zuverlässig gelagert und an einen Einsatz oder Einbauort transportiert werden.

Weiterhin wird die oben genannte Aufgabe durch ein Kunststoffrohrsystem, insbesondere Kunststoffabgasrohrsystem oder Kunststoffschutzrohrsystem, umfassend wenigstens einen Rohrverbund nach einer der vorangehenden Ausführungsformen, gelöst. Erfindungsgemäß umfasst das Kunststoffrohrsystem dabei ein oder mehrere, gleichartig oder wenigstens teilweise andersartig ausgebildete, Fixiermittel, zur Anordnung an einer oder mehreren Oberflächen.

Zur Vermeidung unnötiger Wiederholung wird im Hinblick auf die vorteilhaften Wirkungen, sowie die vorteilhaften Ausführungen des Kunststoffrohrsystems auf den oben beschriebenen Rohrverbund verwiesen.

Zusammengefasst ermöglicht die vorliegende Erfindung, ein Kunststoffrohrsystem, aus Rohrverbünden vorzuschlagen, wobei das Kunststoffrohrsystem und die Rohrverbünde insbesondere einfach herzustellen und zu installieren sind.

Als Fixiermittel sollen in diesem Zusammenhang solche Bauteile verstanden werden, die als Teil einer Befestigungsanordnung, an einer oder mehr Oberflächen befestigt werden können, insbesondere zur Sicherung und/oder Führung der Rohrverbünde des Kunststoffrohrsystems, wobei den befestigten Rohrverbünden bevorzugt eine gewisse Bewegungstoleranz erhalten bleibt. Als Oberflächen werden in diesem Zusammenhang insbesondere bauliche Strukturen wie zum Beispiel Wände oder Böden verstanden, wobei ebenso anderweitige Oberflächen möglich sind, so ist zum Beispiel auch denkbar, dass durch die Fixiermittel Kunststoffrohre aneinander und/oder an Rohrverbünden oder an bestehenden Rohrsystemen befestigt werden.

Gemäß einer weiteren vorteilhaften Ausführungsform kann vorgesehen sein, dass das Kunststoffrohrsystem als Fixierleiste ausgebildete Fixiermittel, welche bevorzugt eine größere Längenerstreckung als Breitenerstreckung aufweisen, umfassend wenigstens eine, bevorzugt zwei Durchlassöffnungen, insbesondere Schraublöcher, umfasst. Die als Fixierleiste ausgebildeten Fixiermittel eignen sich hierbei besonders vorteilhaft für eine platzsparende Anordnung an und/oder auf einer Oberfläche. Die Ausführung der Fixierleisten können je nach Anwendungsbereich variieren, wobei besonders bevorzugt die Längenerstreckung länger ist als die Breitenerstreckung, um die Platzverhältnisse der Fixierleiste zu optimieren. Andere Ausführungen der Fixierleiste sind allerdings ebenso denkbar, zum Beispiel mit einer wenigstens annähernden quadratischen Grundfläche oder einer runden Grundfläche. Über die Durchlassöffnungen und darin eingebrachte Verbindungsmittel, wie beispielsweise Schrauben, kann eine Verbindung mit dem Untergrund oder der Oberfläche geschaffen werden, auf dem die Fixierleiste aufliegt.

Gemäß einer weiteren bevorzugten Ausführungsform kann vorgesehen sein, dass das Kunststoffrohrsystem als Fixierriemen ausgebildete Fixiermittel, insbesondere mit einer entlang der Längserstreckung des Fixierriemens auf einen Fluchtpunkt hinführenden abnehmenden Breitenerstreckung, umfassend wenigstens eine, bevorzugt fünf Durchlassöffnungen, insbesondere Schraublöcher, umfasst. Insbesondere sind alle Durchlassöffnungen, in Bezug auf die Längserstreckung des Fixierriemens, an einer Seite nebeneinander angeordnet, wodurch der Fixierriemen zum Beispiel abschnittsweise zwischen Mauerziegeln angeordnet werden kann und/oder besonders geeignet für eine Montage an Flachdächern geeignet ist. Über die Durchlassöffnungen und darin eingebrachte Verbindungsmittel, wie beispielsweise Haftmittel und/oder Kleber, kann eine Verbindung mit dem Untergrund oder der Oberfläche geschaffen werden, auf dem der Fixierriemen aufliegt und/oder anliegt.

Gemäß einer weiteren besonders bevorzugten Ausführungsform kann vorgesehen sein, dass an den Fixiermitteln ein Rastzylinder angeordnet ist, welcher zumindest zwei, bevorzugt vier, Rastnasen aufweist. Die Ausführung als Rastzylinder mit vier Rastnasen hat sich hierbei als besonders stabil und einfach handzuhaben herausgestellt, wobei auch eine andere Anzahl von Rastnasen, wie zum Beispiel fünf Rastnasen, denkbar ist.

Gemäß einer weiteren vorteilhaften Ausführungsform kann vorgesehen sein, dass das Kunststoffrohrsystem wenigstens eine Klemmvorrichtung zur Sicherung eines Rohrverbunds, umfassend zumindest ein Halteelement, insbesondere ausgebildet als Halbring, und ein, insbesondere manschettenartiges, Befestigungselement, umfasst. Die Klemmvorrichtung kann bevorzugt mit den Fixiermitteln eine Befestigungsanordnung zur Befestigung des Kunststoffrohrsystems ausbilden. Die Ausbildung des Halteelements als Halbring ist dabei besonders bevorzugt, da diese Form besonders vorteilhaft ein Rohr umfassen kann und somit auch als Führungshilfe mit einem, insbesondere manschettenartigen Befestigungselement zusammenwirken kann.

Gemäß einer weiteren vorteilhaften Ausführungsform kann vorgesehen sein, dass dem Befestigungselement eine Arretiereinheit an einem ersten Ende des Befestigungselements zugeordnet ist und Arretiermittel auf der Grundfläche des Befestigungselements angeordnet sind, wobei die Arretiereinheit und die Arretiermittel das Ausbilden einer Rastverbindung, bevorzugt reversibel, ermöglichen. Das Ausbilden der Rastverbindung kann bei dieser Ausführungsform nach dem Prinzip eines Kabelbinders ausgestaltet werden, wodurch eine besonders einfache und intuitive Ausbildung der Verbindung möglich wird. Durch die bevorzugt reversible Ausbildung der Verbindung wird dabei sowohl eine Wiederverwendung des Befestigungselements ermöglicht als auch eine Korrektur und Anpassung der Verbindungsfestigkeit und Position.

Gemäß einer weiteren vorteilhaften Ausführungsform kann vorgesehen sein, dass dem Halteelement ein, insbesondere zylindrischer, bevorzugt hohler, Abstandsabschnitt zugeordnet ist, welcher eine an seinem Innenumfang eingelassene Ringnut umfasst, wobei der Rastzylinder zur Ausbildung einer, bevorzugt formschlüssigen, Verbindung mit der Ringnut, insbesondere Rast- oder Schnappverbindung, in den Abstandsabschnitt einsteckbar ist. Durch diese Ausführungsform kann besonders vorteilhaft das Halteelement mit verschiedenen Fixiermitteln verbunden werden, wobei die Schnappverbindung sich besonders einfach und intuitiv bei der Installation des Kunststoffrohrsystems umsetzen lässt. Des Weiteren kann durch diese Ausführung die Verbindung, insbesondere um 360°, rotiert werden, wodurch die Anordnung der Fixiermittel und Haltemittel zueinander, variabel an die Baubedingungen angepasst werden kann. Andere Verbindungsarten, wie zum Beispiel eine Verbindung über ein Drehgewinde, sind ebenso denkbar, wobei eine Schnappverbindung besonders bevorzugt ist.

Gemäß einer weiteren vorteilhaften Ausführungsform kann vorgesehen sein, dass der Abstandsabschnitt zwei, bevorzugt einander gegenüberliegende, insbesondere schlitzförmige, Öffnungen aufweist, welche zur Durchführung des Befestigungselements ausgebildet sind. Hierdurch wird eine besonders einfache Möglichkeit geschaffen, das Befestigungselement mit dem Halteelement zu verbinden, welche bei der Installation des Kunststoffrohrsystems, insbesondere auch werkzeuglos, umgesetzt werden kann. Auch wird eine Vormontage ermöglicht, bei der bereits das Befestigungselement mit dem Halteelement verbunden ist. Zusammen bilden das an dem Halteelement befestigte Befestigungselement, welches wiederum an Fixiermitteln befestigt ist, eine Befestigungsanordnung aus, welche den Vorteil hat, dass die einzelnen Elemente unabhängig voneinander installiert werden können, aber nicht müssen, wodurch eine höhere Flexibilität bei der Installation und Montage des Kunststoffrohrsystems besteht.

Gemäß einer weiteren vorteilhaften Ausführungsform kann vorgesehen sein, dass das Kunststoffrohrsystem als Fixierplatte ausgebildete Fixiermittel, welche insbesondere mit einer annähernd quadratischen Grundfläche ausgebildet sind, umfassend wenigstens zwei, bevorzugt vier, Durchlassöffnungen, insbesondere Schraublöcher, sowie eine, bevorzugt zentral positionierte, Rohröffnung umfassen, umfasst. Die Fixierplatte ermöglicht hierbei besonders vorteilhaft das Durchführen eines Kunststoffrohres oder Kunststoffrohrabschnittes und/oder Rohrverbundes, insbesondere durch eine Wand oder eine Oberfläche. Die Grundfläche der Fixierplatte ist bevorzugt quadratisch kann aber alternativ zum Beispiel auch rund oder beliebig polygonal ausgeführt sein.

Gemäß einer weiteren vorteilhaften Ausführungsform kann vorgesehen sein, dass die Rohröffnung von einer, bevorzugt zylindrischen, Wand umfasst ist, wobei die Wand auf der Vorder- und/oder Rückseite der Fixierplatte ein Überstand aufweist. Durch die überstehende Wand wird vorteilhaft das Kunststoffrohr oder der Kunststoffabschnitt und/oder der Rohrverbund beim Durchführen durch eine Oberfläche stabilisiert und zum Beispiel vor scharfen Kanten im Durchbruchbereich geschützt.

Gemäß einer weiteren vorteilhaften Ausführungsform kann vorgesehen sein, dass die Rohröffnung einen ersten Abschnitt aufweist, an welchem die Wand bevorzugt senkrecht zur Grundfläche der Fixierplatte ausgebildet ist, welcher in seinem Innenumfang dem maximalen Außenumfang der Strukturabschnitte angepasst ist. Der derart ausgeführte erste Abschnitt der Rohröffnung, ermöglicht ein besonders leichtes Einführen des Kunststoffrohres oder Rohrabschnitts und/oder Rohrverbundes in die Fixierplatte, wobei durch die bevorzugt senkrecht zur Grundfläche der Fixierplatte ausgebildete Wand eine besonders gute Auflage des Kunststoffrohres gewährleistet ist.

Gemäß einer weiteren vorteilhaften Ausführungsform kann vorgesehen sein, dass an dem Innenumfang des ersten Rohröffnungs-Abschnitts Dichtmittel, insbesondere ausgebildet als Dichtring, angeordnet sind. Diese Ausführung ist besonders vorteilhaft, um dem in die Fixierplatte eingeführten Kunststoffrohr oder Rohrabschnitt und/oder Rohrverbund weitere Stabilität zu verleihen und ein Austreten von Fluiden an der Verbindungsstelle des Rohres oder Rohrabschnittes und/oder Rohrabschnitt zu vermeiden. Die Dichtmittel sind besonders bevorzugt als in Umfangrichtung vollständig geschlossener Dichtring ausgebildet, wobei auch andere Ausführungen wie Dichtlaschen denkbar sind. Ebenso ist denkbar, dass mehr als ein Dichtmittel am Innenumfang des Rohröffnungsabschnitts angeordnet sind.

Gemäß einer weiteren vorteilhaften Ausführungsform kann vorgesehen sein, dass die Rohröffnung einen zweiten Abschnitt aufweist, bei dem die Wand mit einer auf die Mittelachse des Kunststoffrohrs zuführenden Neigung ausgebildet ist, die der Neigung der ersten und/oder letzten Wellenberge der Strukturabschnitte, an ihrer von dem jeweiligen Strukturabschnitt abgewandten Seite, entspricht. Durch diese Ausführung kann das Kunststoffrohr oder der Kunststoffabschnitt und/oder der Rohrverbund besonders vorteilhaft in der Fixierplatte befestigt werden, wobei insbesondere ein Durchrutschen des Kunststoffrohres oder Kunststoffrohrabschnitts in Richtung des zweiten Rohrabschnitts verhindert wird. Diese Ausführungsform wirkt besonders vorteilhaft mit den am ersten Rohröffnungsabschnitt ausgebildeten Dichtmitteln zusammen, da hierdurch beidseitig ein Herausrutschen oder Verrutschen des Kunststoffrohres und des Kunststoffrohrabschnitts verhindert wird.

Die Erfindung wird nachfolgend anhand von rein schematischen, beispielhaften Zeichnungen erläutert, die Ausführungsformen der Erfindung zeigen.
- Fig. 1:: ein beispielhaftes einstückiges Kunststoffrohr in einer Seitenansicht;
- Fig. 2a:: eine Perspektivdarstellung eines Versteifungsabschnitts;
- Fig. 2b:: eine Draufsicht auf einen Versteifungsabschnitt mit Blickrichtung entlang der Längsrichtung;
- Fig. 3:: eine perspektivische Ansicht einer Ausführungsform einer Fixierleiste
- Fig. 4:: eine perspektivische Ansicht einer Ausführungsform eines Fixierriemens
- Fig. 5:: eine perspektivische Ansicht einer Ausführungsform eines Haltelements
- Fig. 6:: eine Schnittdarstellung der Verbindungsstelle eines Haltelements mit einem Fixiermittel
- Fig. 7:: eine perspektivische Ansicht einer Ausführungsform einer Fixierplatte
- Fig. 8:: eine teilweise, seitliche Schnittdarstellung eines Kunststoffrohres eingesteckt in eine Fixierplatte
- Fig. 9a:: eine Aufsicht auf ein Kunststoffrohr verbunden mit einer Befestigungsanordnung, mit Blickrichtung entlang der Längsrichtung
- Fig. 9b:: eine perspektivische Ansicht eines Glattrohrabschnitts eines Kunststoffrohres verbunden mit einer Befestigungsanordnung
- Fig. 10a:: eine seitliche Schnittdarstellung eines Rohrverbundes mit einem erfindungsgemäßen Bundelement
- Fig. 10b:: eine vergrößerte, einseitige Seitenansicht der axialen Enden des Innenrings und Außenrings
- Fig. 10c:: eine perspektivische Ansicht eines erfindungsgemäßen Bundelements

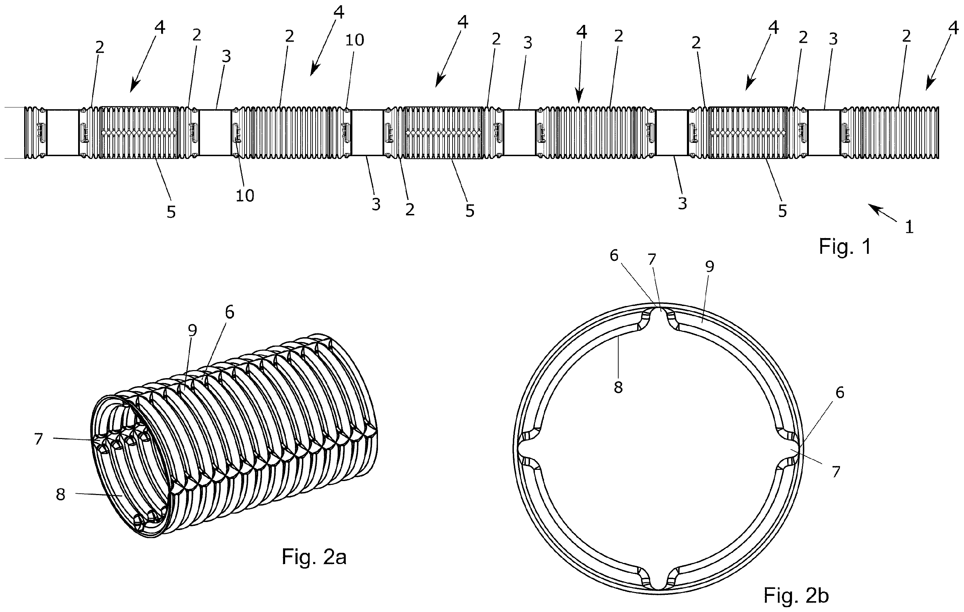

Die Fig. 1 zeigt eine beispielhafte Ausführung eines einstückigen Kunststoffrohr 1 welches zur Anordnung mit einem Rohrverbund geeignet ist, umfassend eine Vielzahl von starren Glattrohabschnitten 3. Das Kunststoffrohr 1 umfasst weiterhin eine Vielzahl von Strukturabschnitten 4, die bevorzugt als flexible Wellenabschnitte ausgebildet sind, wobei die Strukturabschnitte 4 Biegeabschnitte 2 aufweisen, welche wiederum eine Vielzahl von entlang der Längsrichtung L hintereinander angeordneten flexiblen oder bistabilen Falt- oder Wellenelementen aufweisen. Die Strukturabschnitte 4 können gegenüber den Glattrohrabschnitten 3 eine verringerte Wandstärke aufweisen. An wenigstens einem Strukturabschnitt 4, bevorzug an mehr als einem Strukturabschnitt 4, ist ein Versteifungsabschnitt 5 angeordnet, insbesondere zwischen zwei entlang der Längsachse L angrenzenden Biegeabschnitten 2. Der Versteifungsabschnitt 5 kann dabei vorteilhaft in Längsrichtung L länger sein als der oder die angrenzenden Biegeabschnitte, bevorzugt zwischen 200% und 300% länger. Der Versteifungsabschnitt 5 umfasst dabei wenigstens eine, bevorzugt eine Vielzahl von, Versteifungsstrukturen 6, welche, insbesondere steg- oder gratförmig, als in Umfangsrichtung abschnittsweise Unterbrechung 7 der Wellentäler 8 ausgebildet werden, wobei bevorzugt die Radialerstreckung der Versteifungsstrukturen 6 die Radialerstreckung der Wellenberge 9 nicht übersteigt. Die mehreren Versteifungsstrukturen 6 sind dabei bevorzugt gleichmäßig über den Umfang des Kunststoffrohrs 1 verteilt, wobei die Versteifungsstrukturen 6 zum Beispiel spiegelachsensymmetrisch und/oder rotationssymmetrisch über den Umfang verteilt sein können.

Das Kunststoffrohr 1 weist insgesamt bevorzugt eine maximale Länge in Längsrichtung L von 5 m auf, besonders bevorzugt beträgt die Länge 3 m bis 5 m, ganz besonders bevorzugt 2,5 m bis 5 m.

Die Fig. 2a und b zeigen einen Versteifungsabschnitt 5 in einer vergrößerten, perspektivischen Ansicht. Der Versteifungsabschnitt 5 umfasst hierbei vier Versteifungsstrukturen 6, welche, insbesondere steg- oder gratförmig, als in Umfangsrichtung abschnittsweise Unterbrechung 7 der Wellentäler 8 ausgebildet werden, wobei bevorzugt die Radialerstreckung der Versteifungsstrukturen 6 die Radialerstreckung der Wellenberge 9 nicht übersteigt. Die mehreren Versteifungsstrukturen 6 sind dabei bevorzugt gleichmäßig über den Umfang des Kunststoffrohrs 1 verteilt, bevorzugt zum Beispiel spiegelachsensymmetrisch und/oder rotationssymmetrisch.

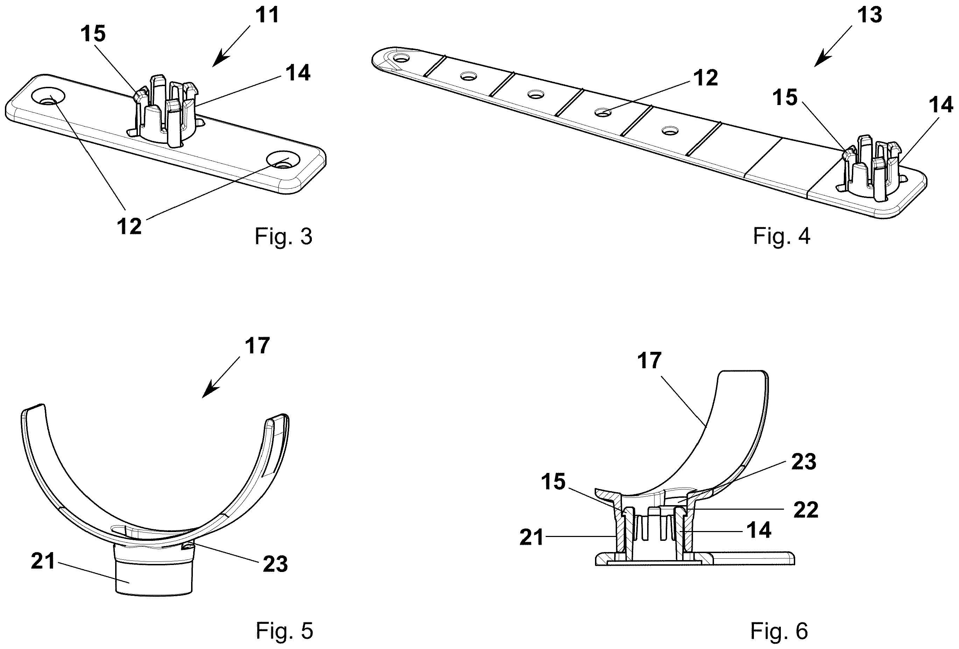

Die Fig. 3 zeigt eine Fixierleiste 11, an welcher zwei Schraublöcher 12 ausgebildet sind. Weiterhin umfasst die Fixierleiste 11 einen Rastzylinder 14 welcher mit vier Rastnasen 15 ausgebildet ist, wobei auch andere Anzahlen von Rastnasen 15, zum Beispiel drei oder fünf denkbar sind. Über die Schraublöcher 12 kann eine Verschraubung mit einem Untergrund oder einer Oberfläche erfolgen, auf dem die Fixierleiste 11 aufliegt. Über den Rastzylinder kann werkzeuglos eine Verbindung mit einem Halteelement hergestellt werden. Ebenso können statt Rastnasen 15 andere Rastmittel vorgesehen sein, zum Beispiel ein Rastring. Die Grundfläche der Fixierleiste 11 ist insbesondere in ihrer Längserstreckung größer als in ihrer Breitenerstreckung, es sind allerdings auch andere Formen denkbar, wie zum Beispiel eine runde oder quadratische Grundfläche. Bei einer solchen anderen Ausführung der Grundfläche der Fixierleiste 11, ist ebenso denkbar, dass mehr oder weniger Schraublöcher 12 vorgesehen werden. Durch die Ausbildung als Fixierleiste 11 kann eine Befestigung auf einer Oberfläche auch dann noch leicht erfolgen, wenn Kunststoffrohre und/oder Rohrverbünde bereits montiert oder vormontiert in der Nähe der Fixierleiste 11 angeordnet sind.

Die Fig. 4 zeigt ein als Fixierriemen 13 ausgebildetes Fixiermittel, umfassend fünf Schraublöcher 12. Die Schraublöcher 12 sind, in Bezug auf die Längserstreckung des Fixierriemens 13, nebeneinander auf einer Seite des Fixierriemens 13 ausgebildet, wodurch eine Anordnung zwischen Mauerziegeln und/oder an einem Flachdach ermöglicht wird. Über die Schraublöcher 12 kann eine Verschraubung und/oder Verklebung mit einem Untergrund oder einer Oberfläche erfolgen, auf dem der Fixierriemen 13 aufliegt und/oder anliegt. Über den Rastzylinder kann werkzeuglos eine Verbindung mit einem Halteelement hergestellt werden. Die Breitenerstreckung des Fixierriemens 13 ist dabei entlang der Längserstreckung des Fixierriemens 13 auf einen Fluchtpunkt hinführend abnehmend ausgebildet, eine gleichbleibende Breitenerstreckung ist allerdings ebenso möglich. Der Fixierriemen 13 umfasst einen Rastzylinder 14, welcher mit vier Rastnasen 15 ausgebildet ist, wobei auch andere Anzahlen von Rastnasen 15, zum Beispiel drei oder fünf denkbar sind. Ebenso können statt Rastnasen 15 andere Rastmittel vorgesehen sein, zum Beispiel ein Rastring.

Die Fig. 5 zeigt ein Haltelement 17, welches insbesondere als Halbring ausgebildet ist, wobei auch andere Ausführungen, zum Beispiel als vollständiger Ring oder gebogene Platte denkbar sind. Das Haltelement 17 umfasst dabei weiterhin einen Abstandsabschnitt 21, welcher insbesondere als hohler Zylinder ausgebildet ist, wobei zum Beispiel auch denkbar ist den Abstandsabschnitt 21 viereckig auszuführen. Am Abstandabschnitt 21 sind hierbei Öffnungen 23 angeordnet, welche in ihrer Höhe und Breite einem hier nicht gezeigten Befestigungselement 18 angepasst sind, welches über die Öffnungen 23 mit dem Haltelement 17 verbunden werden kann.

Die Fig. 6 zeigt den Querschnitt eines Haltelements 17, welches mit einem Fixiermittel, umfassend einen Rastzylinder 14, verbunden ist. Hierbei ist zu sehen, dass der Abstandsabschnitt 21 des Haltelements 17 eine Ringnut 22 an seinem inneren Umfang eingelassen aufweist, in welche die Rastnasen 15 des Rastzylinders 14 eingreifen können, um eine Rastverbindung auszubilden. Die Rastverbindung kann dabei reversibel oder irreversibel ausgebildet sein. Die Verbindung des Rastzylinders 14 mit dem Abstandsabschnitt 21 ist dabei bevorzugt derart angeordnet, dass noch ein hier nicht gezeigtes Befestigungselement 18, über dem Rastzylinder durch die Öffnungen 23 des Abstandsabschnitts 21 geführt werden kann.

Die Öffnungen 23 können dabei in ihren Maßen für ein einmaliges Durchführen eines Befestigungselements 18, oder für ein mehrfaches Durchführen ausgebildet sein.

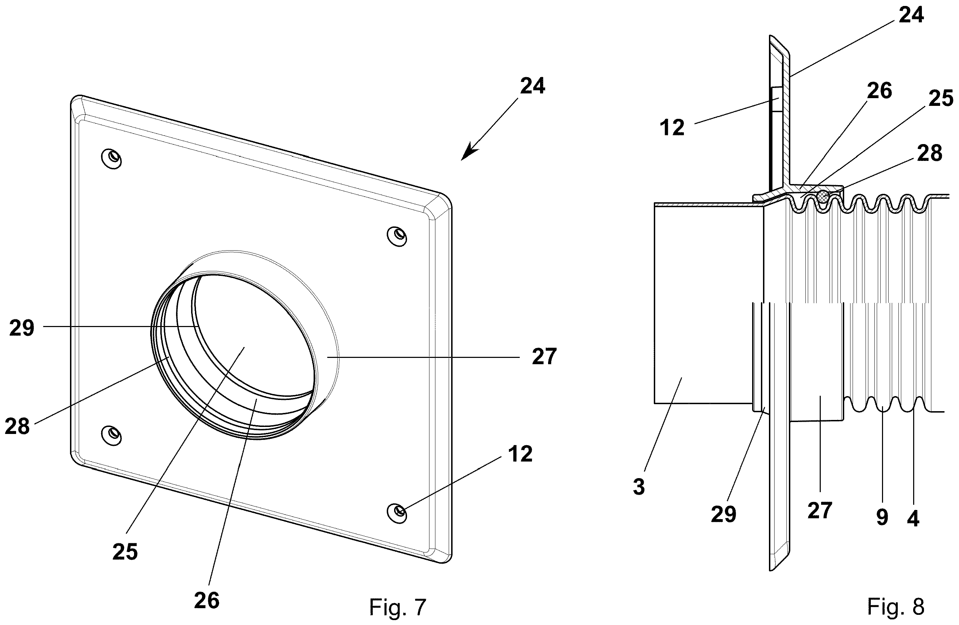

In der Fig. 7 wird eine Fixierplatte 24 gezeigt, welche mit einer annähernd quadratischen Grundfläche ausgebildet ist, wobei auch Formen wie zum Beispiel eine runde Grundfläche denkbar sind. Die Fixierplatte 24 umfasst dabei vier Schraublöcher 12, wobei auch eine andere Anzahl von Schraublöchern 12 möglich ist. Die Fixierplatte 24 umfasst bevorzugt eine geneigte Rahmung an ihrem äußeren Rand, welche einen Abstand zu einer Oberfläche, an welcher die Fixierplatte 24 montiert werden kann, herstellt. Zentral auf der Fixierplatte 24 ist eine Rohröffnung 25 ausgebildet, welche in ihrem Durchmesser einem Kunststoffrohr 1 angepasst ist. Die Rohröffnung 25 ist dabei von einer, insbesondere zylindrischen, Wand 26 umrahmt, welche auf der Vorder- und Rückseite der Fixierplatte 24 einen Überstand aufweist. Die Rohröffnung 25 umfasst dabei einen ersten Abschnitt 27, an welchem die Wand 26 senkrecht zu der Grundfläche der Fixierplatte 24 ausgebildet ist und Dichtmittel 28, insbesondere ausgebildet als Dichtring umfasst sind. Weiterhin umfasst die Rohröffnung 25 einen zweiten Abschnitt 29, welcher mit einer Neigung ausgebildet ist, die der Neigung der entlang der Längsrichtung L letzten und ersten Wellenberge der Strukturabschnitte 4 angepasst ist.

Auf der Fig. 8 ist ein teilweiser Querschnitt eines Kunststoffrohrs 1, welches in einer Fixierplatte 24 angeordnet ist zu sehen. Dabei ist die Fixierplatte 24 mit einer annähernd quadratischen Grundfläche ausgebildet, wobei auch Formen wie zum Beispiel eine runde Grundfläche denkbar sind. Die Fixierplatte 24 umfasst dabei vier Schraublöcher 12, wobei auch eine andere Anzahl von Schraublöchern 12 möglich ist. Die Fixierplatte 24 umfasst bevorzugt eine geneigte Rahmung an ihrem äußeren Rand, welche einen Abstand zu einer Oberfläche an welcher die Fixierplatte 24 montiert werden kann, herstellt. Zentral auf der Fixierplatte 24 ist eine Rohröffnung 25 ausgebildet, welche in ihrem Durchmesser einem Kunststoffrohr 1 angepasst ist. Die Rohröffnung 25 ist dabei von einer, insbesondere zylindrischen, Wand 26 umrahmt, welche auf der Vorder- und Rückseite der Fixierplatte 24 einen Überstand aufweist. Die Rohröffnung 25 umfasst dabei einen ersten Abschnitt 27, an welchem die Wand 26 senkrecht zu der Grundfläche der Fixierplatte 24 ausgebildet ist und Dichtmittel 28, insbesondere ausgebildet als Dichtring, umfasst sind. Weiterhin umfasst die Rohröffnung 25 einen zweiten Abschnitt 29, welcher mit einer Neigung ausgebildet ist, die der Neigung der entlang der Längsrichtung L letzten und ersten Wellenberge der Strukturabschnitte 4 angepasst ist.

Das Kunststoffrohr 1 ist in der Rohröffnung 25 der Fixierplatte 24 angeordnet, wobei die Neigung des zweiten Rohrabschnitts 29 verhindert, dass das Kunststoffrohr 1 durch die Fixierplatte 24 hindurchrutschen kann und die Dichtmittel 28 verhindern, dass das Kunststoffrohr 1 entgegen der Einführrichtung aus der Fixierplatte 24 herausrutschen kann.

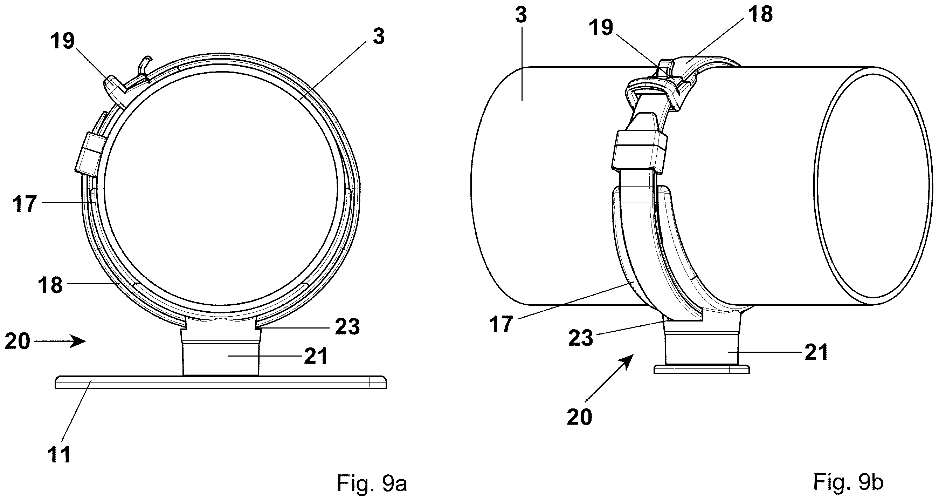

Die Fig. 9 a und b zeigen einen Glattrohrabschnitt 3 eines Kunststoffrohres 1 in einer Befestigungsanordnung 20. Die Befestigungsanordnung 20 umfasst hierbei eine Fixierleiste 11, welche über einen hier nicht sichtbaren Rastzylinder 14 mit dem Abstandsabschnitt 21 des Haltelements 17 verbunden ist. Ein Befestigungselement 18 ist durch die Öffnungen 23 geführt und mit dem Haltelement 17 verbunden. Dabei sind die Öffnungen 23 derart ausgebildet, dass das Befestigungselement 18 ein- oder zweimal durch die Öffnungen 23 geführt werden kann. Das Befestigungselement ist hierbei insbesondere manschettenartig ausgebildet und umfasst den Glattrohrabschnitt 3, wobei es streckenweise an dem als Halbring ausgebildeten Haltelement 17 geführt wird. Das Befestigungselement 18 weist an einem ersten Ende eine Arretiereinheit 19 auf und Arretiermittel auf seiner Grundfläche, wobei die Arretiereinheit 19 und die Arretiermittel das Ausbilden einer Rastverbindung, bevorzugt reversibel, ermöglichen. Das Befestigungselement 18 kann dabei eine Lasche aufweise in welche das freie Ende des Befestigungselements 18 eingesteckt werden kann.

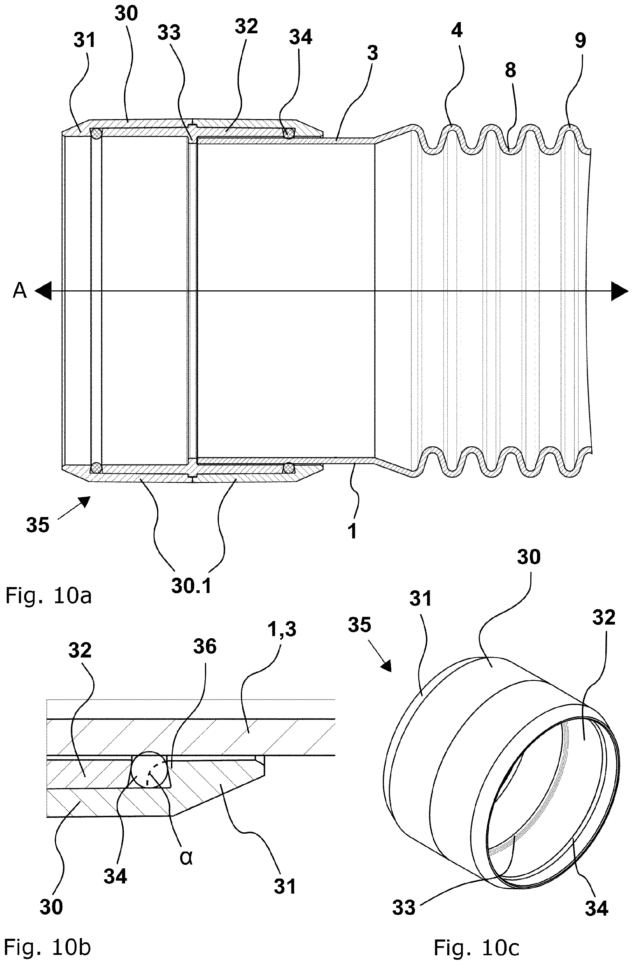

Die Fig. 10a zeigt eine seitliche Schnittdarstellung durch einen Rohrverbund. Hierbei ist ein Rohr 1, bevorzugt ein einstückiges Kunststoffrohr, in einem Bundelement 35 angeordnet, insbesondere eingesteckt. Das Rohr 1 weist hierbei einen endseitigen Glattrohrabschnitt 3 auf und einen Strukturabschnitt 4 auf, welcher als Wellenrohrabschnitt, mit Wellentälern 8 und Wellenbergen 9, ausgebildet ist. Das Bundelement 35 umfasst hierbei einen Außenring 30, welcher aus zwei spiegelsymmetrischen Flanken 30.1 ausgebildet ist, und Endabschnitte 31, welche insbesondere verdickt sind, und hakenförmig derart ausgebildet sind, dass sie einen Innenring 23 wenigstens teilweise umfassen. Wie in Fig. 10b zu sehen wird durch die Grundfläche des Außenrings und einem inneren Hakenabschnitt 36 des Endabschnitts 31 ein Winkel α eingeschlossen, welcher mit 70 bis 90°, bevorzugt 75 bis 85°, ausgebildet ist. Der Innenring 32 weist an seinem axialen Ende, bezogen auf die axiale Richtung A, eine Neigung auf, die dem Winkel α spiegelsymmetrisch ausgebildet ist. Hierdurch kann ein Dichtring 34 in der Ausnehmung zwischen Außenring 30 und Innenring 32 angeordnet werden, wobei der Dichtring durch den Winkel α und die gegenüberliegende Neigung fixiert wird und in der durch Außenring und Innenring gebildeten Nut gehalten wird.

Der Innenring 32 ist formschlüssig am Außenring 30 angeordnet, und umfasst einen Steckkragen 33, welcher als Innen- und Außenwulst ausgebildet ist. An seinem Außenwulst sind dem Steckkragen 33 Einkerbungen des Außenrings 30 formschlüssig zugeordnet, wodurch insbesondere bei einer Verbindung des Außenrings 30 und Innenrings 32 mit einer Schrumpfmontage, eine besonders stabile Verbindung ausgebildet wird.

An seinem inneren Ringwulst ist dem Steckkragen 33 das Rohr 1 bündig angeordnet, wobei der Steckkragen 33 als Positionierungshilfe für die beiden einsteckbaren Rohre 1 dient und derart ausgebildet ist, dass er mit dem Innenumfang der Rohre 1 abschließt, wodurch eine durchgängige Fläche, zum Beispiel zum Leiten eines Fluids oder zur Aufnahme von Kabeln, entsteht.

Die Fig. 10c zeigt das erfindungsgemäße Bundelement 35 in einer perspektivischen Darstellung. Das Bundelement 35 umfasst hierbei einen Außenring 30 und einen Innenring 32, welche insbesondere durch Schrumpfmontage, formschlüssig miteinander verbunden sind. Der Au-ßenring 30 umfasst zwei spiegelsymmetrischen Flanken 30.1, und Endabschnitte 31, welche insbesondere verdickt sind, und hakenförmig derart ausgebildet sind, dass sie einen Innenring 23 wenigstens teilweise umfassen. Der Innenring 32 umfasst einen Steckkragen 33, welcher als Innen- und Außenwulst ausgebildet ist.

Der Dichtring 34 ist aus elastischem Material. Er ist nicht mit reibungsmindernden Zusätzen oder Beschichtungen versehen. Beim Einstecken oder Einschieben des Glattrohrabschnitts 3 wird die axiale Sicherung des Rohrverbunds und die Fluiddichte oder Mediendichte im Wesentlichen über die Haftreibung des Dichtrings 34 an der Außenoberfläche des Glattrohrs erreicht. Dadurch kann sowohl einfach als auch effektiv eine Verbindung zweier Rohrenden zur Herstellung eines Rohrverbundes erreicht werden. Dies bedeutet auch, dass das der Innendurchmesser des Bunde-Iments - abgesehen vom Dichtring - im einsatzbereiten erkalteten Zustand so gewählt ist, dass dieser minimal größer ist als der Außendurchmesser des endseitigen Glattrohrabschnitts 3, so dass ein verhältnismäßig einfaches Einführen des Glattrohrabschnitts 3 ermöglicht wird, gleichzeitig beim Passieren des Dichtrings 34 aber eine Reibung und eine resultierende Haftkraft zwischen dem Bundelement 35 und dem Rohr 1 erzeugt wird.

### Bezugszeichen

- 1: Rohr
- 2: Biegeabschnitte
- 3: Glattrohrabschnitte
- 4: Strukturabschnitte
- 5: Versteifungsabschnitt
- 6: Versteifungsstruktur
- 7: Unterbrechung
- 8: Wellental
- 9: Wellenberg
- 11: Fixierleiste
- 12: Schraublöcher
- 13: Fixierriemen
- 14: Rastzylinder
- 15: Rastnasen
- 16: Klemmvorrichtung
- 17: Haltelement
- 18: Befestigungselement
- 19: Arretiereinheit
- 20: Befestigungsanordnung
- 21: Abstandsabschnitt
- 22: Ringnut
- 23: Öffnungen
- 24: Fixierplatte
- 25: Rohröffnung
- 26: Wand
- 27: Erster Abschnitt der Rohröffnung
- 28: Dichtmittel
- 29: Zweiter Abschnitt der Rohröffnung
- 30: Außenring
- 30.1: Flanke des Außenrings
- 31: Endabschnitt
- 32: Innenring
- 33: Steckkragen
- 34: Dichtring
- 35: Bundelement
- 36: Innerer Hakenabschnitt

- α: Winkel am Endabschnitt
- L: Längsachse / Längsrichtung
- A: Axiale Richtung

## Patentansprüche

1. Rohrverbund,
umfassend wenigstens zwei Rohre (1), bevorzugt einstückige Kunststoffrohre, zum Leiten von gasförmigen oder flüssigen Fluiden, bevorzugt Kunststoff-Abgasrohr zum Ableiten von Abgas, insbesondere von Gebäudeheizungen, oder zum Schutz von innenliegend geführten Leitungen und Kabeln,
wobei die Rohre (1) jeweils wenigstens einen, bevorzugt eine Vielzahl von, Glattrohrabschnitten (3) umfassen,
und ein Bundelement (35), insbesondere eine Rohr-Rosette, wobei die Rohre (1) über das Bundelement (35), bevorzugt fluidleitend, verbunden sind,
**dadurch gekennzeichnet,**
**dass** das Bundelement (35) einen Außenring (30) und einen Innenring (32) umfasst, welche formschlüssig miteinander verbunden sind.

2. Rohrverbund nach Anspruch 1,
**dadurch gekennzeichnet,**
**dass** der Innenring (32), entlang einer axialen Richtung (A), eine kürzere axiale Erstreckung als der Außenring (30) aufweist, wobei der Außenring (30) an seinen axialen Enden, insbesondere verdickte, bevorzugt wenigstens abschnittsweise geneigte, Endabschnitte (31) ausbildet, welche den Innenring (32) wenigstens teilweise umfassen.

3. Rohrverbund nach einem der Ansprüche 1 oder 2,
**dadurch gekennzeichnet,**
**dass** zwischen dem Außenring (30) und Innenring (32), insbesondere zwischen den Endabschnitten (31) und dem Innenring (32), bevorzugt zwei, Aussparungen ausgebildet werden, wobei den Aussparungen Dichtmittel, bevorzugt in Umfangrichtung vollständig geschlossene Dichtringe (34), zugeordnet sind.

4. Rohrverbund nach Anspruch 3,
**dadurch gekennzeichnet,**
**dass** die Endabschnitte (31) hakenartig ausgebildet sind, wobei ein innerer Hakenabschnitt (36) und die Grundfläche des Außenrings einen Winkel (α) von 70 bis 90°, bevorzugt 75 bis 85°, einschließen

5. Rohrverbund nach Anspruch 4,
**dadurch gekennzeichnet,**
**dass** der Innenring (32) an seinen axialen Enden eine Neigung aufweist, welche zu dem Winkel (α) spiegelsymmetrisch ausgebildet ist.

6. Rohrverbund nach einem der Ansprüche 1 bis 5,
**dadurch gekennzeichnet,**
**dass** der Innenring (32) einen, bevorzugt entlang der axialen Erstreckung zentral angeordneten, Steckkragen (33) umfasst, welcher an der äußeren und inneren Seite der Grundfläche des Innenrings (32), insbesondere als umfangseitiger Innen- und Außenwulst, ausgebildet ist.

7. Rohrverbund nach Anspruch 6
**dadurch gekennzeichnet,**
**dass** der Außenring (30) aus zwei gleichartigen, insbesondere spiegelsymmetrischen, Flanken (30.1) besteht, welche an ihrer Verbindungsstelle eine dem Steckkragen (33) komplementäre Einkerbung einschließen.

8. Rohrverbund nach einem der Ansprüche 1 bis 7,
**dadurch gekennzeichnet,**
**dass** ein oder mehr Rohre (1) als einstückige Kunststoffrohre ausgebildet sind, umfassend wenigstens einen, bevorzugt eine Vielzahl von, starren Glattrohrabschnitten (3) und wenigstens einen, bevorzugt eine Vielzahl von, entlang einer Längsachse (L) des Kunststoffrohres (1) wenigstens einseitig an die starren Glattrohrabschnitte (3) angrenzenden Strukturabschnitten (4), wobei die Strukturabschnitte wenigstens einen flexiblen Biegeabschnitt (2) aufweisen, welcher als Wellenrohrabschnitt ausgebildet ist, wobei wenigstens ein Strukturabschnitt (4), bevorzugt jeder zweite Strukturabschnitt (4), besonders bevorzugt jeder Strukturabschnitt (4), einen Versteifungsabschnitt (5) aufweist, wobei der Versteifungsabschnitt (5) als stabilisierter Wellenrohrabschnitt ausgebildet ist, der eine entlang der Längsachse (L) verlaufende Versteifungsstruktur (6) aufweist, die durch eine in Umfangsrichtung abschnittsweise Unterbrechung (7) von Wellentälern (8) des Wellenrohrabschnitts ausgebildet wird.

9. Kunststoffrohrsystem, insbesondere Kunststoff-Abgasrohrsystem oder Kunststoff-Schutzrohrsystem, umfassend wenigstens einen Rohrverbund nach einem der Ansprüche 1 bis 8,
**dadurch gekennzeichnet,**
**dass** das Kunststoffrohrsystem ein oder mehrere, gleichartig oder wenigstens teilweise andersartig ausgebildete, Fixiermittel, zur Anordnung an einer oder mehreren Oberflächen, umfasst.

10. Kunststoffrohrsystem nach Anspruch 9 oder 10,
**gekennzeichnet durch**,
als Fixierleiste (11) ausgebildete Fixiermittel, welche bevorzugt eine größere Längenerstreckung als Breitenerstreckung aufweisen, umfassend wenigstens eine, bevorzugt zwei Durchlassöffnungen, insbesondere Schraublöcher (12).

11. Kunststoffrohrsystem nach einem der Ansprüche 9 bis 11,
**gekennzeichnet durch**,
als Fixierriemen (13) ausgebildete Fixiermittel, insbesondere mit einer entlang der Längserstreckung des Fixierriemens (13) auf einen Fluchtpunkt hinführenden abnehmenden Breitenerstreckung, umfassend wenigstens eine, bevorzugt fünf, Durchlassöffnungen, insbesondere Schraublöcher (12).

12. Kunststoffrohrsystem nach einem der Ansprüche 9 bis 12,
**dadurch gekennzeichnet,**
**dass** an den Fixiermitteln ein Rastzylinder (14) angeordnet ist, welcher zumindest zwei, bevorzugt vier, Rastnasen (15) aufweist.

13. Kunststoffrohrsystem nach einem der Ansprüche 9 bis 13,
**gekennzeichnet durch**,
wenigstens eine Klemmvorrichtung (16) zur Sicherung eines Rohrverbundes, umfassend zumindest ein Haltelement (17), insbesondere ausgebildet als Halbring, und ein, insbesondere manschettenartiges, Befestigungselement (18).

14. Kunststoffrohrsystem nach Anspruch 14,
**dadurch gekennzeichnet,**
**dass** dem Befestigungselement (18) eine Arretiereinheit (19) an einem ersten Ende des Befestigungselements (18) zugeordnet ist und Arretiermittel auf der Grundfläche des Befestigungselements (18) angeordnet sind, wobei die Arretiereinheit (19) und die Arretiermittel das Ausbilden einer Rastverbindung, bevorzugt reversibel, ermöglichen.

15. Kunststoffrohrsystem nach Anspruch 14 oder 15,
**dadurch gekennzeichnet,**
**dass** dem Haltelement (17) ein, insbesondere zylindrischer, bevorzugt hohler, Abstandsabschnitt (21) zugeordnet ist, welcher eine an seinem Innenumfang eingelassene Ringnut (22) umfasst, wobei der Rastzylinder (14) zur Ausbildung einer, bevorzugt formschlüssigen, Verbindung mit der Ringnut (22), insbesondere Schnappverbindung, in den Abstandsabschnitt (21) einsteckbar ist.

16. Kunststoffrohrsystem nach Anspruch 16,
**dadurch gekennzeichnet,**
**dass** der Abstandsabschnitt (21) zwei, bevorzugt einander gegenüberliegende, insbesondere schlitzförmige, Öffnungen (23) aufweist, welche zur Durchführung des Befestigungselements (18) ausgebildet sind.

17. Kunststoffrohrsystem nach einem der Ansprüche 9 bis 17,
**gekennzeichnet durch**,
als Fixierplatte (24) ausgebildete Fixiermittel, welche insbesondere mit einer annähernd quadratischen Grundfläche ausgebildet sind, umfassend wenigstens zwei, bevorzugt vier, Durchlassöffnungen, insbesondere Schraublöchern (12), sowie eine, bevorzugt zentral positionierte, Rohröffnung (25) umfassen.

18. Kunststoffrohrsystem nach Anspruch 18,
**dadurch gekennzeichnet,**
**dass** die Rohröffnung (25) von einer, bevorzugt zylindrischen, Wand (26) umfasst ist, wobei die Wand (26) auf der Vorder- und/oder Rückseite der Fixierplatte (24) einen Überstand aufweist.

19. Kunststoffrohrsystem nach Anspruch 19,
**dadurch gekennzeichnet,**
**dass** die Rohröffnung (25) einen ersten Abschnitt (27) aufweist, an welchem die Wand (26) bevorzugt senkrecht zur Grundfläche der Fixierplatte (24) ausgebildet ist, welcher in seinem Innenumfang dem maximalen Außenumfang der Strukturabschnitte (4) angepasst ist.

20. Kunststoffrohrsystem nach Anspruch 20,
**dadurch gekennzeichnet,**
**dass** die Rohröffnung (25) einen zweiten Abschnitt (29) aufweist, bei dem die Wand (26) mit einer auf die Mittelachse des Kunststoffrohrs (1) zuführenden Neigung ausgebildet ist, die der Neigung der ersten und/oder letzten Wellenberge (9) der Strukturabschnitte (4), an ihrer von dem jeweiligen Strukturabschnitt (4) abgewandten Seite, entspricht.
